# EUROPÄISCHE PATENTSCHRIFT

(11) **EP 2 409 584 B1**
(45) Veröffentlichungstag und Bekanntmachung des Hinweises auf die Patenterteilung: **13.03.2013**
(21) Anmeldenummer: 11002903.0
(22) Anmeldetag: 07.04.2011
(51) Int. Cl.: A23N 12/02, A01D 33/08

(54) **Vorrichtung zur Reinigung von Rodungsfrüchten**
Device for cleaning root crops
Dispositif de nettoyage de plantes-racines

(30) Priorität: 20.07.2010 DE 102010031827
(43) Veröffentlichungstag der Anmeldung: 25.01.2012
(73) Patentinhaber: AMB Anlagen- und Metallbau GmbH, 24966 Sörup (DE)
(72) Erfinder: Frauen, Holger, 24966 Sörup (DE); Engelhardt, Wolfgang, 24966 Sörup (DE)
(74) Vertreter: Lobemeier, Martin Landolf

(56) Entgegenhaltungen:
- EP-A1- 0 026 855
- DE-A1- 2 528 486
- DE-A1- 3 003 436
- DE-B- 1 277 169
- DE-U1-202009 015 495
- DE-U1-202009 016 220

## Beschreibung

Die Erfindung betrifft eine Vorrichtung zur Reinigung von Rodungsfrüchten mit einem Transportband, das die Rodungsfrüchte über einen Aufnahmetrichter in einen Wassertank fördert, aus dem die Rodungsfrüchte nach Bewegung im Wasser herausgefördert werden.

Vorrichtungen zur Reinigung von Rodungsfrüchten sind bekannt. Bisher dienen sie insbesondere zur Reinigung von Rodungsfrüchten wie Rüben für Zuckerfabriken und sind dort für sehr große Durchsatzmengen im großtechnischen Maßstab realisiert.

Da die Zuckerrübe als nachwachsender Rohstoff im Rahmen einer bodenverträglichen Fruchtfolge zunehmend an Bedeutung auch für die Vergärung in Biogasanlagen gewinnt und Biogasanlagen vergleichsweise klein und lokal aufgestellt sind, werden an die Vorrichtungen zur Reinigung von Zuckerrüben und ähnlichen Rodungsfrüchten wie Kartoffeln nun Anforderungen gestellt, diese Anlagen wesentlich kleiner und weniger kapital- und personalintensiv zu realisieren, so dass sie dezentral beispielsweise an jeder Biogasanlage, die in jedem kleinen Dorf vorhanden ist, aufgestellt werden können oder sogar mobil gleich bei der Ernte auf einem Acker betrieben werden könnte.

Insbesondere stellt das Reinigungsverfahren für die Rüben die Anforderung, eine Endreinigung herzustellen, da anders als in Zuckerfabriken, keine nachfolgenden Maschinen reinigen und bei der Vergärung stattdessen empfindliche Maschinen zum Einsatz kommen.

Die wirkungsvolle Trennung der Feldfrucht von den anderen anhaftenden Materialien ist daher besonders gut zu gewährleisten. Jegliche negative Beeinträchtigung des Gärprozesses durch Verunreinigung des Substrates in Form von Bakterienbrücken sind zu vermeiden.

Im Stand der Technik sind für das Waschen von Feldfrüchten, insbesondere auf dem Feld selbst, die DE 20 2009 015 495 U1 zu nennen, in der Rüben mittels einer Schurre in einen Trommelabscheider gegeben werden, aus dem die gereinigten Feldfrüchte sowie die Erde, die Steine und das Wasser jeweils separat in dazu geeignete Auffangbehälter abgeführt werden, um aus diesen entweder erneut genutzt zu werden (das Wasser) oder endgültig abgelegt zu werden.

Außer der Waschtrommel ist lediglich noch ein Stabrost als Wasserabscheider erläutert.

Die Reinigung der Rüben ist bei dieser Waschtrommel ungenügend, zum anderen ist die Trennung der einzelnen Anhaftungspartikel Steine und Kiesel sowie Sand nur unzureichend.

Weiter ist eine Vorrichtung zur Feldreinigung von Rodungsfrüchten aus der EP 0 026 855 B1 bekannt, bei der ein Reinigungsmittel, insbesondere Wasser, das als Kondenswasser aus der Umgebungsluft gewonnen wird oder durch Entsaften der Früchte selbst, auf die Rodungsfrüchte aufgestrahlt wird, wobei die Rodungsfrüchte selbst sich auf einem Laufband befinden.

Es ist einfach einsehbar, dass auf diese Weise nur eine ungenügende Reinigung erzielt wird.

Schließlich ist noch die DE 103 26 960 A1 zu nennen, in der Schwergut aus Rüben-Wassergemischen abgetrennt wird, indem bei Rotation einer Trommel die schweren Bestandteile des Gemisches mittels einer Schneckenwendel an der Stirnseite ausgetragen werden.

Auch diese Trommeleinrichtung hat den Nachteil, dass die Verweilzeit in der Trommel ausschlaggebend für das Reinigungsergebnis ist und somit der Durchsatz begrenzt ist.

Alle bisherigen Methoden basieren entweder auf einer rein mechanischen Lösung, bei der durch einen mechanischen Abrieb, die der Feldfrucht anhaftenden Fremdstoffe abgetrennt werden oder auf einer mechanisch wassergebundenen Lösung, bei der durch Bewegung der Feldfrucht in einer mit chemischen Zusätzen angereicherten Wasserlösung das spezifische Gewicht der Feldfrucht derart in Relation zu der Wasserlösung gesetzt wird, dass die Feldfrucht im gereinigten Zustand aufschwimmt, im ungereinigten jedoch noch länger in der Wasserlösung verbleibt.

All diesen Systemen nach dem Rotationsprinzip ist gemeinsam, dass eine vorhandene Restblattmasse und Wurzelfasern am Erntegut zu einer Zusetzung der Reinigungstrommel führen und auf diese Weise die Kapazitätsleistung der Anlage erheblich beeinträchtigen. Das weit aus gravierendere Problem besteht aber darin, dass Fremdkörper in gleicher Größe wie die Rübe nicht selektiert werden können.

Bei einem Einsatz der Zuckerrübe bei der Vergärung in einer Biogasanlage, können insbesondere größere Steine jedoch erhebliche Schäden verursachen. Auch kleinere Anhaftungen können sich schnell akkumulieren. Zudem sollte das Reinigungsverfahren mechanische Einwirkungen auf die Rübenkörper nach Möglichkeit minimieren, da dadurch die Lagerfähigkeit der Rübe beeinträchtigt wird und diese nur noch sofort zur Biogasverwertung genutzt werden kann.

Der Erfindung liegt damit die Aufgabe zugrunde, eine Vorrichtung zur Reinigung von Rodungsfrüchten zu schaffen, die bei vertretbarem Aufwand mit hohem Durchsatz arbeitet.

Erfindungsgemäß wird diese Aufgabe durch die Merkmale des Anspruchs 1 gelöst, die Unteransprüche geben vorteilhafte Ausgestaltungen der Erfindung an.

Weitere Vorteile der Erfindung ergeben sich aus nachfolgender Beschreibung eines bevorzugten Ausführungsbeispiels anhand der beigefügten Zeichnung. Dabei zeigt:

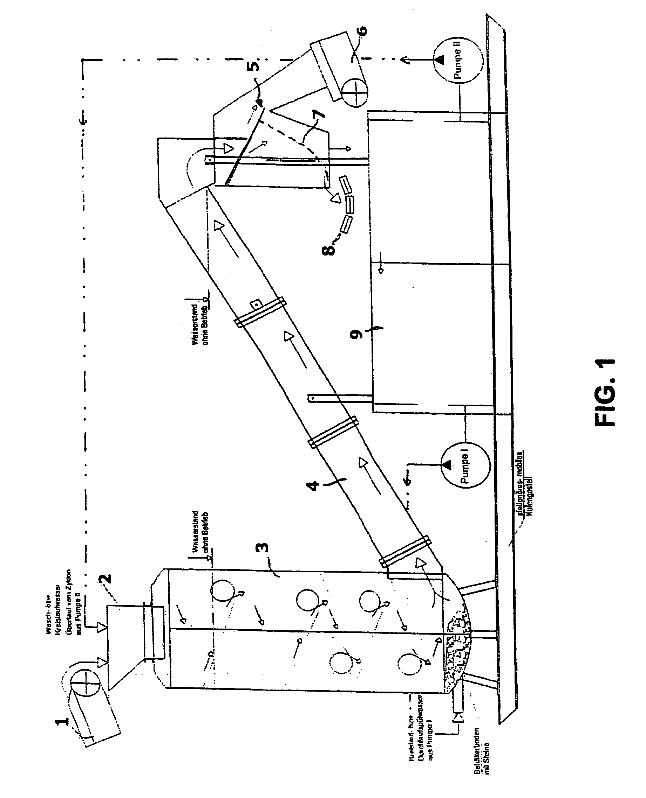

- Fig. 1: eine schematische Darstellung der vorgeschlagenen Vorrichtung.

Die in der Fig. 1 dargestellte Vorrichtung weist insbesondere eine Hauptförderstrecke 4 als aufwärtslaufenden, wasserführenden Kanal auf, dem ein Wassertank 3 vorangestellt ist, in dem größere Steine abgetrennt werden. In der Hauptförderstrecke 4, in der mit erheblichem Wassereinsatz die Rüben aufwärts gedrückt werden, werden Sand und kleine Steine abgetrennt, jedoch ebenfalls im rechten Bereich der Zeichnung mit Spül- und Waschwasser ausgefördert.

Es ist nun ein Stangenrost 5 dargestellt, der kleinere Bestandteile nach unten auf ein Bogensieb 7 durchfallen lässt, während die Rüben selbst in einer Ausfördereinrichtung 6, einem Transportband aufgegeben werden können.

Dadurch, dass das Bogensieb 7 Verunreinigungen, beispielsweise in der Fraktion <25mm, aber > 1mm auf ein Abförderband 8 abgibt, kann Spül- und Waschwasser, das lediglich noch Verunreinigungen < 1 mm aufweisen wird, nach unten in ein Wasserabsetzbecken 9 mit einer ersten Flüssigkeitskammer Schmutzwasserbereich 9a gegeben werden, die durch einen Überlauf in eine zweite Flüssigkeitskammer Klarwasserbereich 9b überführt und in der sich die kleinen Verunreinigungen absetzen können.

Aus der zweiten Flüssigkeitskammer (Klarwasserbereich 9b) wird dann durch eine Pumpe 11 Wasser in erheblichem Maße, beispielsweise mit einer Förderleistung von mehr als 1 m³/min bis zu 20 m³ als Durchspülwasser in den Rohrstutzen 10 eingegeben. Dieses Wasser sprudelt insbesondere gegen die nach unten sich absenkenden Rüben, die in den Aufnahmetrichter 2 in den Wassertank 3 eingegeben wurden.

Im Wassertank 3 werden sich daher die groben, schweren Verunreinigungen wie mittlere Steine, die in anderen Anlagen zusammen mit den Rüben ausgefördert werden, absetzen. Sie können durch einen Schieber in entsprechende Ausförderstutzen abgeführt werden, aus denen sie unter Belassung des Wassers im Wassertank 3 herausgenommen werden können.

Eine Pumpe 12 fördert Wasch- und Kreislaufwasser aus dem Überlauf von einem Waschzyklon in den Trichter 2 zu den ungewaschenen Rüben.

Hier ist es nicht notwendig, sauberes Wasser zu nutzen, da ohnehin zunächst die Grobverschmutzungen von den Rüben getrennt werden müssen. Bevor die Rüben in den Wassertank 3 gegeben werden, erfolgt in einem vorgelagerten Schüttbunker mit Stabsieb eine erste grobe Vorreinigung der Rüben, die dann über ein Stollenband 1 dem weiteren Reinigungsprozess zugeführt werden und in dem grob mechanisch trocken vorgenommenen Reinigungszustand in den Aufnahmetrichter 2 des Wassertanks 3 der Waschanlage gelangen.

Gleichzeitig wird dem Wassertank 3 Kreislaufwasser, insbesondere in einer Menge von 10-15 m³/min zugeführt. Durch diese enorme Fliessleistung des Kreislaufwassers werden die aufgegebenen Rüben über Schikane- und Prallvorrichtungen an den Boden des Wassertanks 3 gespült, wo mit der Pumpe 11 Kreislaufspülwasser zur Stabilisierung der Förderleistung und damit zum Vorwärtsbewegen des Reinigungsgutes zugeführt wird.

Dies bewirkt, dass das Reinigungsgut in die Hauptförderstrecke 4 gelangt, wo die Neigung des Auslaufkanals bewirkt, dass die Fließgeschwindigkeit innerhalb des geschlossenen Systems nur solche Körper (Rüben) sowie Leichtstoffe (wie Sand und Erde) an den oberen Wasserstandspunkt des Auslaufkanals befördert, die ein spezifisches Gewicht von < 1,3 kg/dm³ und einer Korngröße kleiner 25mm aufweisen. Alle Körper, die schwerer oder größer sind, also dem Erntegut anhaftende Steine, verbleiben im Wassertank 3 und sammeln sich dort im Behälterboden, der über entsprechende Sensoren überwacht und entleert wird.

Die über die Förderleistung zum oberen Wasserstandspunkt des auslaufenden Kanals gelangenden Rüben und ausgespülten Anhaftungen (Sand und Erde), gelangen zusammen mit dem Sand- und Waschwasser auf den mit Gefälle angeordnete Stangenrost 5 zur Entwässerung. An dieser Stelle kann auch bei Bedarf mittels einer geringen Menge an Frischwasser über entsprechende Fächerdüsen ein letztes Finish des Ernteguts vorgenommen werden, um insbesondere noch anhaftende Bakterienwolken abzuspülen. Über das nachgelagerte Transportband, die Ausfördereinrichtung 6, wird das gereinigte Erntegut zur weiteren Verarbeitung abtransportiert.

Das Spül-/Waschwasser gelangt durch den Stangenrost 5 auf das Bogensieb 7 und wird an dieser Stelle weitgehend gereinigt, indem Verunreinigungen mit einer Korngröße kleiner als der Abstand der Stangen des Stangenrosts 5 und größer als die Löcher des Bogensiebs 7 über das Abförderband 8 abtransportiert werden.

Alle Schwemmstoffe/Verunreinigungen mit einem Durchmesser von <1mm, die also das Bogensieb 7 passieren können, gelangen zusammen mit dem Spül- und Waschwasser in ein zweigeteiltes Wasserabsetzbecken 9, wobei aus einem Klarwasserbereich 9b das Kreislauf-und Durchspülwasser abgezogen wird und ein Schmutzwasserbereich 9b mit einer Pumpe 12 über einen handelsüblichen Zyklon den Aufnahmetrichter 2 des Wassertanks 3 mit dem Wasch- und Kreislaufwasser versorgt. Auf diese Weise gelingt es, das Wasser vor Wiedereintritt in den Wassertank von jeglichen Verunreinigungen mit einer Korngröße <1mm zu reinigen und die gesamte Anlage prinzipiell als geschlossenes System zu fahren, wobei der Pumpenantrieb über den Zapfwellenanschluss eines herkömmlicher Ackerschleppers angetrieben werden kann.

Aufgrund der genannten Wasserdurchsatzmenge lassen sich Durchsatzmengen von über 100 Tonnen pro Stunde an Rüben erzielen, was den Anforderungen des Marktes an die Verarbeitung großer Erntemengen entspricht, wobei bevorzugt in der Hauptförderstrecke 4 (einem Rohr mit Abmessungen zwischen dem 1,5- und 3-fachen des maximal zu erwartenden Rodungsfruchtdurchmessers) Wasser mit einer Förderleistung von 12 m³/min eingefördert wird, so dass der Transport der Rodungsfrüchte in der Hauptförderstrecke 4 allein durch den Wasserkreislauf erfolgt.

Andererseits sind die Herstellungskosten der Vorrichtung und der prinzipiell stabile einfach zu bedienende Aufbau geeignet als bäuerliche Eigenanlage für eine Rübenaufbereitung direkt am Standort einer Hof- Biogasanlage zu dienen. Ein gemeinsames Kufengestell dient zur gelegentlichen Verbringung an einen anderen Ort, ohne dass es aufwändiger Neumontage bedarf.

## Patentansprüche

1. Vorrichtung zur Reinigung von Rodungsfrüchten mit einem Transportband (1), das die Rodungsfrüchte über einen Aufnahmetrichter (2) in einen Wassertank (3) fördert, aus dem die Rodungsfrüchte nach Bewegung im Wasser herausgefördert werden,
**dadurch gekennzeichnet, dass**
- der Wassertank vertikal steht und eine Absenkstrecke bildet, wobei sich am Boden der Absenkstrecke steinschwere Verunreinigungen in der Größenordnung 1/50 Rodungsfrucht bis zur Rodungsfruchtgröße abgetrennt zur gelegentlichen Entnahme sammeln,
- am Ende der Absenkstrecke eine Hauptförderstrecke (4) beginnt, die mit einem aufwärts laufenden wasserführenden Kanal versehen ist, und
- nach der Hauptförderstrecke (4) ein Stangenrost (5) zur Trennung der Rodungsfrüchte von abgelösten, im Transportwasser befindlichen kleineren Rodungsfrucht-Anhaftungen, insbesondere Steinchen und Kies, vorgesehen ist, und dann die gereinigten Rodungsfrüchte einer Ausfördereinrichtung (6) zugeleitet werden.

2. Vorrichtung nach Anspruch 1, **dadurch gekennzeichnet, dass** unterhalb des Stangenrosts (5) ein schräg gestelltes Bogensieb (7) zur Filterung des das Bogensieb (7) passierenden Waschwassers angeordnet ist, während die den Stangenrost (5) passierenden Rodungsfrucht-Anhaftungen, insbesondere Steinchen und Kies, durch die Neigung des Bogensiebs (7) einem Abförderband (8) zugeleitet werden.

3. Vorrichtung nach Anspruch 1 oder 2, **dadurch gekennzeichnet, dass** für die in dem Wassertank (3) absinkenden Rodungsfrüchte Hindernisse in Form von sich in dem Wassertank (3) quer erstreckenden Stangen vorgesehen sind.

4. Vorrichtung nach einem der vorangehenden Ansprüche, **dadurch gekennzeichnet, dass** ein zwei Reinheitsstufen bietendes Wasserabsetzbecken (9) vorgesehen ist, wobei eine Pumpe (11) an den zum weiteren Absetzen des das Bogensieb (7) passierenden Wassers vorgesehenen Schmutzwasserbereich (9a) angeschlossen ist, und diesem Wasser zur Erstreinigung der Rodungsfrüchte durch Einförderung oben in die Absenkstrecke entnimmt.

5. Vorrichtung nach Anspruch 4, **dadurch gekennzeichnet, dass** eine weitere Pumpe (12) an den Klarwasserbereich (9b) nach einem Absetzen des Wassers im Schmutzwasserbereich (9a) angeschlossen ist, und diesem Wasser zur Förderung der Rodungsfrüchte durch Einleiten unten in den Wassertank (3) zur Durchströmung der Hauptförderstrecke (4) mit einer großen Förderleistung von 3 -15 m³ / min entnimmt, so dass der Transport der Rodungsfrüchte in der Hauptförderstrecke (4) allein durch den Wasserkreislauf erfolgt.

6. Vorrichtung nach einem der vorangehenden Ansprüche, **dadurch gekennzeichnet, dass** die Hauptförderstrecke (4) durch ein Rohr mit Abmessungen zwischen dem 1,5- und 3-fachen des maximal zu erwartenden Rodungsfruchtdurchmessers gebildet ist.

7. Vorrichtung nach einem der vorangehenden Ansprüche, **dadurch gekennzeichnet, dass** der Wassertank (3) die Hauptförderstrecke (4) mit dem Bogensieb (7) und dem Stangenrost (5) und das Wasserabsetzbecken (9) auf einem gemeinsamen mobilen Kufengestell montiert sind.

## Claims

1. A device for cleaning root crops having a conveyor belt (1) conveying the root crops over a receiving hopper (2) into a water tank (3), out of which the root crops are conveyed after being moved in the water,
**characterized in that**
- the water tank is standing horizontally and forms a settling path, contaminants having the weight of a stone collect at the bottom of the settling path in the order of magnitude 1/50 root crop to root-crop size are separated for occasional removal,
- a main conveying path (4) starts at the end of the settling path and is provided with an upward extending water-carrying channel and
- downstream of the main conveying path (4) a bar screen (5) is provided for separating the root crops from smaller root-crop attachments existing in the transportation water, in particular small stones and gravel, and that the cleaned root crops are then fed to a feeding-out device (6).

2. The device according to Claim 1, **characterized in that** below the bar screen (5) an inclined arc sieve (7) is arranged for filtering the cleaning water passing the arc sieve (7) while the root-crop attachments passing the bar screen (5), in particular small stones and gravel, are guided to a forwarding belt (8) as a result of the inclination of the arc sieve (7).

3. The device according to Claim 1 or 2, **characterized in that** obstacles in the shape of bars that extend transverse in the water tank (3) are provided for the root crops that settle in the water tank (3).

4. The device according to one of the preceding claims, **characterized in that** a water settling basin (9) having two cleanliness stages is provided, one pump (11) being connected to the wastewater section (9a) provided for further settling of the water passing the arc sieve (7) and removing water from the wastewater section for initial cleaning of the root crops by feeding in at the top of the settling path.

5. The device according to Claim 4, **characterized in that** a further pump (12) is connected to the clean-water section (9b) after settling of the water in the wastewater section (9a) and removes water therefrom for conveying the root crops by introducing at the bottom into the water tank (3) for flowing through the main conveying path (4) having a large conveying rate of 3 - 15 m³ / min so that transport of the root crops in the main conveying path (4) only takes place by circulating water.

6. The device according to one of the preceding claims, **characterized in that** the main conveying path (4) is formed by a pipe having the dimensions between 1.5 and 3 times the maximum root-crop diameter to be expected.

7. The device according to one of the preceding claims, **characterized in that** the water tank (3), the main conveying path (4) with the arc sieve (7) and the bar screen (5), and the water-settling basin (9) are mounted on a joint mobile skid base.

## Revendications

1. Dispositif pour le nettoyage de plantes-racines avec une bande transporteuse (1), qui fait passer les plantes-racines dans un entonnoir de réception (2) et les mène dans réservoir d'eau (3), duquel les plantes-racines sont retirées après agitation dans l'eau,
**caractérisé en ce que**
- le réservoir d'eau se trouve à la verticale et forme un parcours en descente, sachant que sur le fond du parcours en descente, s'amassent des impuretés du poids d'un caillou d'une dimension allant de 1/50e de plante-racine jusqu'à la dimension d'une plante-racine de manière séparée pour être retirée de temps à autre,
- à la fin du parcours en descente, une voie de transport principal (4) commence, qui est équipée d'un canal amenant de l'eau allant vers le haut, et
- après la voie de transport principal (4) une grille à barreaux (5) est prévue pour la séparation des plantes-racines des plus petites adhérences de plante-racine détachées se trouvant dans l'eau de transport, notamment des petites pierres et gravillons, et les plantes-racines lavées sont ensuite menées à un dispositif d'extraction (6).

2. Dispositif selon revendication 1, **caractérisé en ce que** sous la grille à barreaux (5) se trouve un tamis courbe posé en biais (7) pour le filtrage de l'eau de lavage traversant le tamis courbe (7), pendant que les adhérences de plante-racine traversant la grille à barreaux (5), notamment petites pierres et gravillons, sont menées à une bande de transport (8) grâce à l'inclinaison du tamis courbe (7).

3. Dispositif selon revendication 1 ou 2, **caractérisé en ce que**, que pour les plantes-racines s'enfonçant dans le réservoir d'eau (3), des obstacles en forme de bâtons placés de manière transversale dans le réservoir d'eau (3) sont prévus.

4. Dispositif selon l'une des revendications précédentes, **caractérisé en ce qu'**un séparateur d'eau (9) présentant deux niveaux de propreté est prévu, sachant qu'une pompe (11) est raccordée à la zone d'eau souillée (9a) pour continuer à sédimenter l'eau passant dans le tamis courbe (7) et extrait cette eau pour le premier nettoyage des plantes-racines par chargement en haut dans le parcours de descente.

5. Dispositif selon revendication 4, **caractérisé en ce qu'**une autre pompe (12) est raccordée à la zone d'eau décantée (9b) après sédimentation de l'eau dans la zone d'eau souillée (9a), et extrait cette eau pour le transport des plantes-racines par introduction en bas dans le réservoir d'eau (3) pour la traversée de la voie de transport principale (4) avec un débit élevé de 3 - 15 m³ / min, pour que le transport des plantes-racines dans la voie de transport principale (4) n'ait lieu qu'à travers le cycle de l'eau.

6. Dispositif selon l'une des revendications précédentes, **caractérisé en ce que** la voie de transport principale (4) est formée par un tuyau avec des dimensions comprises entre 1,5 et 3 fois le diamètre maximale de plante-racine escompté.

7. Dispositif selon l'une des revendications précédentes, **caractérisé en ce que** le réservoir d'eau (3) la voie de transport principale (4) avec le tamis courbe (7) et la grille à barreaux (5) et le séparateur d'eau (9) sont montés sur un bâti à patins commun mobile.
